# EUROPEAN PATENT APPLICATION

(11) **EP 4 625 612 A1**
(43) Date of publication of application: **01.10.2025**
(21) Application number: 23919425.1
(22) Date of filing: 15.11.2023
(51) Int. Cl.: H01M 10/54

(54) **CRUSHED LITHIUM BATTERY RESOURCE RECOVERY DEVICE**

(30) Priority: 01.02.2023 CN 202310087336
(71) Applicant: Jereh New Energy Regeneration and Recycling Technology Co., Ltd., Laishan District Yantai Shandong 264003 (CN)
(72) Inventor: XU, Bo, Yantai, Shandong 264003 (CN); WANG, Zhixue, Yantai, Shandong 264003 (CN); YU, Xuekong, Yantai, Shandong 264003 (CN); YAN, Rongjie, Yantai, Shandong 264003 (CN); LIN, Wei, Yantai, Shandong 264003 (CN)
(74) Representative: Ziebig Hengelhaupt Intellectual Property Attorneys Patentanwaltskanzlei PartGmbB
(86) International application number: PCT/CN2023/131808
(87) International publication number: WO 2024/159861

(57) **Abstract**

Disclosed is a crushed lithium battery resource recovery apparatus, which includes a decompaction device, where the decompaction device includes: a housing, a first inlet being disposed at a lower portion of the housing, a first outlet being disposed at an upper portion, a discharging hopper being disposed at a bottom, and a second outlet being disposed at a bottom end of the discharging hopper; a center barrel, spirally distributed blades being disposed on periphery of the center barrel; a screen, the screen being disposed in an axial extension direction of the center barrel, a third outlet being disposed at an upper portion of the screen, and a second inlet being disposed at a lower portion; and a driving apparatus, the driving apparatus being connected with the center barrel to drive the center barrel to rotate. The center barrel and the screen are disposed in the housing. The screen is disposed between the center barrel and the housing. The discharging hopper is disposed below the center barrel and the screen and separated by a partition plate. A region between the screen and the housing communicates with the discharging hopper. The first inlet is connected with the second inlet. The first outlet is connected with the third outlet. Different from a conventional solution in which a compacted material is further crushed, in the technical solution of the present disclosure, the decompaction device is adopted to unfold the compacted material, thereby reducing the content of metal particles in battery powder, and facilitating the metal to be ground into fine powder and then be sorted and recovered.

## Description

### CROSS-REFERENCE TO RELATED APPLICATIONS

The present disclosure claims all benefits of Chinese Patent Application No. 202310087336.5 entitled "CRUSHED LITHIUM BATTERY RESOURCE RECOVERY APPARATUS" filed on February 1, 2023, which is incorporated herein by reference in its entirety.

### TECHNICAL FIELD

The present disclosure generally relates to the field of lithium battery recovery, and more specifically, to a crushed lithium battery resource recovery apparatus and method.

### BACKGROUND

Currently, a method for recovering pole powder (positive and negative pole powder) in a lithium battery is to coarsely crush the battery and remove impurities and then crush pole pieces (including pole powder, a binder and metal foil) once or multiple times, then enter a powder manufacturing apparatus to grind copper-aluminum foil in the pole pieces into 100-mesh to 300-mesh particles, so as to strip metal from the pole powder, then separate the pole powder from the metal through a vibrating sieve, and finally separate the copper-aluminum metal through a specific gravity sieve. The defect of using this process is that in a continuous crushing process of the metal, fine metal that is difficult to be separated continuously accumulates, resulting in low purity of black powder recovered at a back end, and affecting the implementation of a back end processing technology. After the battery is coarsely crushed and impurities are removed, the pole powder is separated from the metal foil through a water washing process for the pole pieces. The separated metal is selected according to color sorting to obtain copper and aluminum. The defects are that the effect of sieving of copper and aluminum sheets through color sorting is poor, and the sorting purity is not high. In addition, the water washing manner causes a heavy load and high difficulty in water processing. It is necessary to increase the investment in water processing devices and processing agents.

### SUMMARY

The present disclosure provides a crushed lithium battery resource recovery apparatus, which includes a decompaction device, where the decompaction device includes:
a housing, a first inlet being disposed at a lower portion of the housing, a first outlet being disposed at an upper portion, a discharging hopper being disposed at a bottom, and a second outlet being disposed at a bottom end of the discharging hopper;
a center barrel, spirally distributed blades being disposed on periphery of the center barrel;
a screen, the screen being disposed in an axial extension direction of the center barrel, a third outlet being disposed at an upper portion of the screen, and a second inlet being disposed at a lower portion; and
a driving apparatus, the driving apparatus being connected with the center barrel to drive the center barrel to rotate.

The center barrel and the screen are disposed in the housing. The screen is disposed between the center barrel and the housing. The discharging hopper is disposed below the center barrel and the screen and separated by a partition plate. A region between the screen and the housing communicates with the discharging hopper. The first inlet is connected with the second inlet. The first outlet is connected with the third outlet.

In some embodiments, the crushed lithium battery resource recovery apparatus further includes a loading apparatus, where the loading apparatus passes through the first inlet and the second inlet and extends into a region between the screen and the center barrel.

In some embodiments, the crushed lithium battery resource recovery apparatus further includes a material recovery apparatus, where the material recovery apparatus includes a first material recovery apparatus and a second material recovery apparatus.

In some embodiments, one side of the first outlet is connected with the third outlet, and the other side is connected with the first material recovery apparatus.

In some embodiments, the second outlet is connected with the second material recovery apparatus.

In some embodiments, the crushed lithium battery resource recovery apparatus further includes a comprehensive sorting apparatus, where the comprehensive sorting apparatus is a vertical air classification apparatus, and separates a first material recovered by the first material recovery apparatus to form a third material and a fourth material.

In some embodiments, the crushed lithium battery resource recovery apparatus further includes a powder removal apparatus, where the powder removal apparatus separates the fourth material to form a fifth material. In some embodiments, the powder removal apparatus includes a powder removal apparatus housing, a rotor and
a rotor driving apparatus. The rotor is disposed inside the powder removal apparatus housing. The rotor driving apparatus drives the rotor to rotate at a high speed. A third inlet is disposed at an upper portion of the powder removal apparatus housing, and a fourth outlet is disposed at a lower portion.

In some embodiments, the powder removal apparatus is an airflow pulverizer.

In some embodiments, the crushed lithium battery resource recovery apparatus further includes a sieving apparatus, where the sieving apparatus separates the fifth material into a sixth material and a second material.

In some embodiments, different from a conventional solution in which a compacted material is further crushed, in the present disclosure, the decompaction device is adopted to unfold the compacted material, thereby reducing the content of metal particles in battery powder, and facilitating the metal to be ground into fine powder and then be sorted and recovered.

### BRIEF DESCRIPTION OF THE DRAWINGS

FIG. 1 is a schematic structural diagram of a decompaction apparatus according to an embodiment of the present disclosure;
FIG. 2 is a schematic structural diagram of a first powder removal apparatus according to an embodiment of the present disclosure; and
FIG. 3 is a process flowchart according to an embodiment of the present disclosure.

Description of reference numerals:
1-decompaction device;
11-housing, 111-first inlet, 112-first outlet, 113-discharging hopper, 114-second outlet, 115-partition plate; 12-center barrel, 121-blade; 13-screen, 131-third outlet, 132-second inlet; 14-driving apparatus;
2-loading apparatus;
31-first material recovery apparatus;
4-comprehensive sorting apparatus;
5-powder removal apparatus, 51-powder removal apparatus housing, 52-rotor, 53-rotor driving apparatus, 54-third inlet, 55-fourth outlet; and
6-sieving apparatus.

### DETAILED DESCRIPTION

The technical solutions in examples of the present disclosure are clearly and completely described below with reference to the accompanying drawings in the examples of the present disclosure. Apparently, the described examples are some rather than all of the examples of the present disclosure. All other examples obtained by those of ordinary skill in the art based on the examples of the present disclosure without any creative effort shall fall within the scope of protection of the present disclosure.

In the specification and claims of the present disclosure, the terms "first" and "second" are used for distinguishing similar objects, rather than describing a specific sequence or order. It should be understood that data used in such a way may be interchanged in a proper case, so that the examples of the present disclosure may be implemented in an order different from those illustrated or described here. Moreover, the objects distinguished by the terms "first" and "second" are usually of the same category, and the number of the objects is not limited. For example, there may be one or more first objects. In addition, in the specification and claims, the term "and/or" indicates at least one of the connected objects, and the character "/" generally indicates that the associated objects before and after it are in an "or" relationship.

The tapered filter and pipeline provided in the examples of the present disclosure are described in detail below through specific examples and application scenarios thereof with reference to the accompanying drawings.

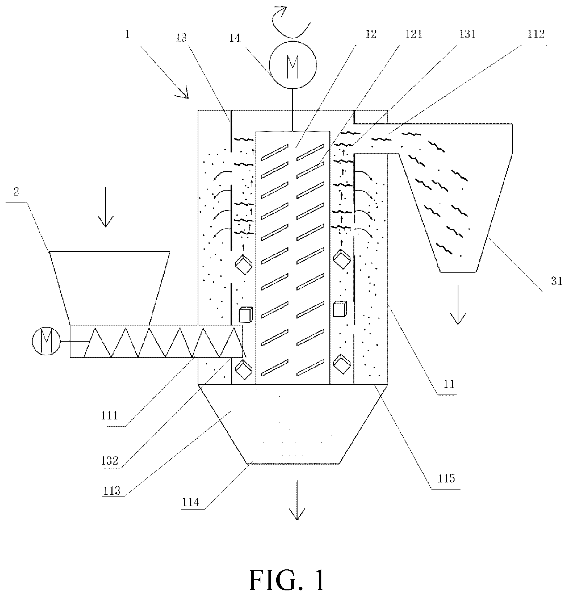

As shown in FIG. 1 to FIG. 2, an example of the present disclosure discloses a crushed lithium battery resource recovery apparatus, which includes a decompaction device 1. The decompaction device 1 includes:
a housing 11, where a first inlet 111 is disposed at a lower portion of the housing 11, a first outlet 112 is disposed at an upper portion, a discharging hopper 113 is disposed at a bottom, and a second outlet 114 is disposed at a bottom end of the discharging hopper 113;
a center barrel 12, where spirally distributed blades 121 are disposed on periphery of the center barrel 12;
a screen 13, where the screen 13 is disposed in an axial extension direction of the center barrel 12, a third outlet 131 is disposed at an upper portion of the screen 13, and a second inlet 132 is disposed at a lower portion; and
a driving apparatus 14, where the driving apparatus 14 is connected with the center barrel 12 to drive the center barrel 12 to rotate.

The center barrel 12 and the screen 13 are disposed in the housing 11. The screen 13 is disposed between the center barrel 12 and the housing 11. The discharging hopper 113 is disposed below the center barrel 12 and the screen 13 and separated by a partition plate 115. A region between the screen 13 and the housing 11 communicates with the discharging hopper 113. The crushed lithium battery resource recovery apparatus further includes a loading apparatus 2. The loading apparatus 2 passes through the first inlet 111 and the second inlet 132 and extends into a region between the screen 13 and the center barrel 12. The crushed lithium battery resource recovery apparatus further includes a material recovery apparatus. The material recovery apparatus includes a first material recovery apparatus 31 and a second material recovery apparatus. One side of the first outlet 112 is connected with the third outlet 131, and the other side is connected with the first material recovery apparatus 31.

The second outlet 114 is connected with the second material recovery apparatus.

In some embodiments, a first material is a mixture of an unfolded battery pole piece and a housing, and a second material is battery powder.

In some embodiments, the crushed lithium battery in the present example refers to a coated or compacted lithium battery, that is, coated or compacted pole piece and battery housing. In some embodiments, the lithium battery may be extruded or shredded by a crusher, so that in a process of crushing the lithium battery, the housing of the lithium battery is curled, and the battery pole piece is wrapped inside and compacted together with the housing, thereby obtaining the coated or compacted battery pole piece and housing. However, after the lithium battery is crushed, it is difficult to separate and recover the battery powder on the battery pole piece, so the crushed lithium battery resource recovery apparatus provided in the present example can effectively recover the battery powder in such lithium battery particularly.

Referring to FIG. 1, the decompaction device 1 includes the housing 11. The first inlet 111 is disposed at the lower portion of the housing 11, and a crushed lithium battery enters the housing through the first inlet 111. The crushed lithium battery resource recovery apparatus further includes the loading apparatus 2. The loading apparatus 2 passes through the first inlet 111 and the second inlet 132 and extends into the region between the screen 13 and the center barrel 12. Specifically, the loading apparatus 2 includes a loading barrel, a transmission barrel communicating with the loading barrel, and a driver. The transmission barrel is horizontally disposed. A top of the loading barrel communicates with the transmission barrel through an opening. A spiral transmission component is disposed in the transmission barrel. The driver is connected with the spiral transmission component to drive the spiral transmission component to rotate around a central axis direction of the transmission barrel. An exemplary driver is a motor, and the motor is fixed coaxially with a central axis of the spiral transmission component to drive the spiral transmission component to rotate, so that the crushed lithium battery enters the loading apparatus through the opening and may be subsequently fed to the bottom between the center barrel 12 and the screen 13 through the spiral transmission component.

In some embodiments, a central axis of the center barrel 12 is disposed parallel to a height direction of the housing 11, and the center barrel 12 is located at a middle position of the housing 11. The screen 13 is disposed in the axial extension direction of the center barrel 12, so that a first annular space is formed between the screen 13 and the center barrel 12. In some embodiments, a top of the screen 13 abuts against a top of the housing 11, and a bottom of the screen 13 abuts against the partition plate 115. The spirally distributed blades 121 are disposed on the periphery of the center barrel 12. The driving apparatus 14 is connected with the center barrel 12 to drive the center barrel 12 to rotate. In some embodiments, the driving apparatus 14 may be a driving motor, and an output axis of the driving motor is coaxially fixed or in transmission connection with the center barrel 12, thereby driving the center barrel 12 to rotate. Through the spirally distributed blades 121 disposed rotationally, the blades 121 constantly generate a pushing force in an axial direction for surrounding gases, so that the crushed lithium battery located in the first annular space is repeatedly hit between the blades 121 of the center barrel 12 and the screen 13, the coated or compacted lithium battery becomes loose or open under repeated hits, and the pole piece inside is separated from the housing. The rotating blades 121 collide with the crushed lithium battery, so that a battery material collides with the screen 13. After colliding with the screen 13, part of the battery powder directly enters an annular space formed by the screen 13 and the housing 11, that is, a second annular space through screen holes of the screen 13. Because an acting force of rotating the center barrel 12 in the second annular space is relatively small, the battery powder, that is, the second material, located in the second annular space falls toward the bottom of the housing 11 due to the gravity of the battery powder, and through the connection of the second outlet 114 and the second material recovery apparatus, the second material may be recovered by the second material recovery apparatus.

Considering different conditions such as weights of different types of lithium batteries, a rotation speed of the center barrel 12 may be adjusted. The rotation speed of the center barrel 12 is adjusted to ensure a magnitude of a spirally upward force generated by the spirally distributed blades 121 in a process of rotating the center barrel 12, and further adjust a magnitude of a force that the crushed lithium battery collides with the screen 13, so that different types of lithium batteries and lithium batteries with different weights may be effectively decompacted in the decompaction device. Exemplarily, the rotation of the center barrel 12 is adjustable, including using a driving motor with an adjustable rotation speed, and adjusting the rotation speed of the driving motor to further achieve the adjustment of the rotation speed of the center barrel 12. Similarly, the blades 121 may also be detachably disposed on the center barrel 12, and the magnitude of the force that the crushed lithium battery collides with the screen 13 is adjusted by adjusting a form of the blades 121. Exemplarily, a pitch between the spirally distributed blades 121 may be changed.

Referring to FIG. 1, the third outlet 131 is disposed at the upper portion of the screen 13, the first outlet 112 is disposed above the housing 11, one side of the first outlet 112 is connected with the third outlet 131, and the other side of the first outlet 112 is connected with the first material recovery apparatus. In a process of rotating the center barrel 12, the blades 121 of the center barrel 12 constantly generate a pushing force in an axial direction for the surrounding gases, so that the crushed lithium battery located in the first annular space is repeatedly hit between the blades 121 of the center barrel 12 and the screen 13, the coated or compacted lithium battery becomes loose or open under repeated hits, and the pole piece inside is separated from the housing. Because of a small windward area, the material that is not unfolded inside cannot be carried away by an upward airflow generated by rotation of the center barrel 12. By repeatedly hitting the material between the blades 121 of the center barrel 12 and the screen 13, after the housing of the coated or compacted material is opened, a windward surface is enlarged, and the material is carried away by the generated upward air to a unified outlet. Therefore, the material is decompacted and decoated, that is, the first material is obtained, and the first material flows into the first material recovery apparatus 31 through the third outlet 131 and the first outlet 112, so as to achieve the recovery of the first material.

Because the first material recovered by the first material recovery apparatus is a mixture of a battery housing and a pole piece, the crushed lithium battery resource recovery apparatus further includes a comprehensive sorting apparatus 4. The comprehensive sorting apparatus 4 is a vertical air classification apparatus. The battery housing and the pole piece have different weights. Therefore, the first material recovered by the first material recovery apparatus 31 may be separated by means of air classification to form a third material and a fourth material. The third material is the battery housing, and the fourth material is the battery pole piece.

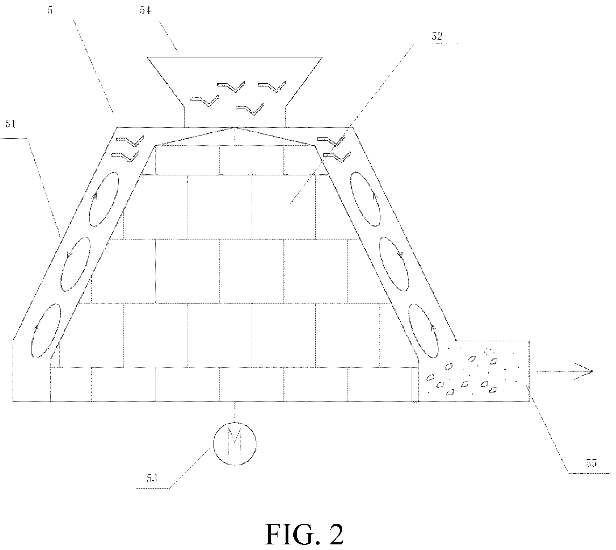

Referring to FIG. 2, the crushed lithium battery resource recovery apparatus further includes a powder removal apparatus 5. The powder removal apparatus 5 separates the fourth material to form a fifth material. The fifth material is a mixture of a battery pole piece and battery powder.

The powder removal apparatus 5 includes a powder removal apparatus housing 51, a rotor 52 and a rotor driving apparatus 53. The rotor 52 is disposed inside the powder removal apparatus housing 51. The rotor driving apparatus 53 drives the rotor 52 to rotate at a high speed. A third inlet 54 is disposed at an upper portion of the powder removal apparatus housing 51, and a fourth outlet 55 is disposed at a lower portion. Specifically, the rotor 52 is a grid-like rotor. The fourth material enters the powder removal apparatus housing 51 through the third inlet 54. The rotation of the rotor 52 is driven under the action of the rotor driving apparatus 53. Multiple vortexes are formed between the powder removal apparatus housing 51 and the rotor 52. Under the action of airflow and collision, the battery pole piece is wrinkled into a particle material. In the process of kneading and deforming the battery pole piece, the pole powder on the battery pole piece may fall off from the battery pole piece. The pole powder and the kneaded and deformed battery pole piece are discharged out of the powder removal apparatus housing 51 through the fourth outlet 55 at the bottom of the powder removal apparatus housing 51, and the material of the fourth outlet 55 is recovered, so as to achieve the collection of the mixture of the battery pole piece and the battery powder.

In some embodiments, the powder removal apparatus 5 is an airflow pulverizer. Materials are pushed to collide with each other by airflow to separate the battery powder and ensure the integrity of copper-aluminum foil. Alternatively, the mixture of the battery pole piece and the battery powder may be obtained, that is, a process of separating the fourth material to form the fifth material is achieved.

Referring to FIG. 2, in some embodiments, the shape of a cross section of the rotor 52 in a direction perpendicular to a horizontal plane is a trapezoid, the trapezoid includes a short side and a long side that are parallel to the horizontal plane, and the short side is located above the long side in a height direction of the powder removal apparatus housing 51. The short side and the long side encircle with each other by an annulus to form the trapezoid, and a grid-like through hole structure is formed on the annulus to form a grid-like rotor. By disposing the trapezoidal structure, because the third inlet 54 of the powder removal apparatus housing 51 is disposed at the upper portion of the powder removal apparatus housing 51, after entering the powder removal apparatus housing 51, the battery pole piece may fall toward the bottom of the powder removal apparatus housing 51 under the action of gravity of the battery pole piece. With the trapezoidal structure of the rotor 52, the battery pole piece will be kneaded and deformed multiple times by grids at different heights during the process of falling, thereby ensuring that the battery pole piece can be kneaded and formed when reaching the bottom of the powder removal apparatus housing 51. In addition, the size of the particle material formed by the battery pole piece is uniform due to the action of multiple times of kneading, thereby facilitating subsequent sieving. In this manner, further separation of the battery powder is achieved. By kneading the battery pole piece through airflow, the separation of the battery powder is achieved, and simultaneously, the copper-aluminum foil is kneaded into wrinkled particles having a relatively uniform size, thereby creating conditions for subsequent sorting of copper and aluminum. Compared with a conventional process in which the metal of the battery pole piece is ground into fine powder and then sorted and recovered, it is more convenient to sort and reuse, and it can also ensure that the battery powder is completely stripped.

In some embodiments, the battery pole piece includes a battery positive pole piece and a battery negative pole piece. Therefore, after the battery pole piece is kneaded into a particle material, the particle material includes copper particles and aluminum particles.

The crushed lithium battery resource recovery apparatus further includes a sieving apparatus 6. The sieving apparatus 6 separates the fifth material into a sixth material and a second material. The sixth material includes copper and aluminum particles. Specifically, the sieving apparatus 6 includes a particle size classifier. By placing a mixture of the copper and aluminum particles and the battery powder into the particle size classifier, the copper and aluminum particles may be separated from the battery powder according to a difference between particle sizes of the copper and aluminum particles and the battery powder, thereby ensuring the collection effect of the battery powder of the crushed lithium battery. Further, the battery powder may be recovered by a cyclone collector and a bag dust collector; and the copper and aluminum particles may pass through a specific gravity sieve to sieve out copper particles and aluminum particles.

Referring to FIG. 1 and FIG. 2, the crushed lithium battery resource recovery apparatus provided in the present disclosure is more suitable for a material of a lithium battery that is coarsely crushed at a front end to remove a separator, a crushed battery pole piece material, or the like. The crushed battery pole piece does not need to be further pulverized, and the battery powder can be separated from the pole piece through a brief process. The decompaction device 1 opens the battery housing and the battery pole piece that are coated or compacted together in a manner of mechanical collision, so as to damage a battery material portion, thereby greatly reducing the generation of aluminum powder. The battery material from which the housing is removed enters the powder removal apparatus 4. By means of mechanical kneading, the damage to the metal copper foil and aluminum foil is reduced, and simultaneously, the metal is kneaded into wrinkled particles having a relatively uniform size. In this process, the battery powder may be completely stripped, and the obtained mixed material may pass through the particle size classifier to achieve separation between the copper and aluminum particles and the battery powder.

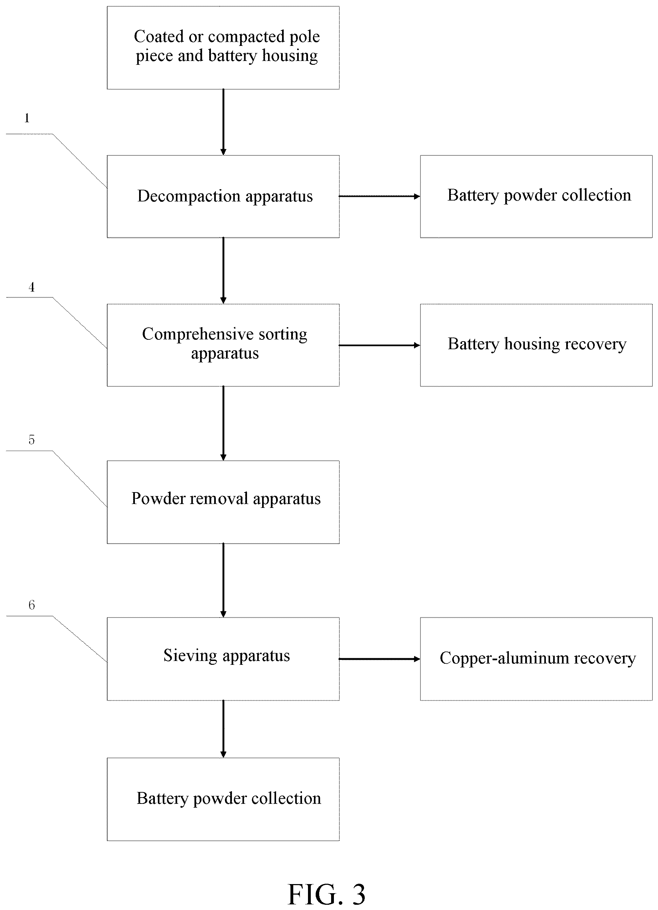

As shown in FIG. 3, the coated or compacted pole piece and battery housing are subjected to extruding and shredding effects of the crusher during the battery crushing process. As a result, the crushed battery housing is curled, and the battery pole piece is wrapped inside and is compacted together, so it is difficult to separate and recover the battery powder on the battery pole piece. To solve the above problems, the process of the present disclosure is as follows:
the coated or compacted pole piece and battery housing enter an annular region between the screen 13 and the center barrel 12 from the loading apparatus 2; and
the center barrel 12 of the decompaction device 1 rotates under the traction of the driving system 14, the coated or compacted material is repeatedly hit between the blades 121 of the center barrel 12 and the screen 13, the coated or compacted material becomes loose or open under repeated hits, and the pole piece inside is separated from the housing.

Because the blades 121 on the center barrel 12 are in a spiral layout, in a rotation process, the blades 121 constantly generate a pushing force in an axial direction for the surrounding gases. By controlling the rotation speed and rotation direction of the center barrel 12, an upward airflow with an adjustable air speed may be formed in the annulus enclosed by the center barrel 12 and the screen 13.

Because of a small windward area, the material that is not unfolded inside the decompaction device 1 cannot be carried away by the generated upward airflow. After the housing of the coated or compacted material is opened, a windward surface is enlarged, and the material is carried away by the generated upward air to the first outlet 112, therefore, the material is decompacted and decoated.

During the rotation of the center barrel 12, the rotating blades 121 collide with the battery material, so that the battery material collides with the screen 13. After colliding with the screen 13, part of the battery powder directly enters an annular space formed by the screen and the housing through screen holes. There is no upward airflow, so the battery powder falls into the discharging hopper 113 at the bottom under the impact of gravity to strip and recover most of the battery powder and pole pieces.

The unfolded battery pole piece and the housing are fed into the comprehensive sorting apparatus 4, and the pole piece is separated from the housing by means of vertical air classification.

The battery pole piece is put into the powder removal apparatus 5. By using the grid-like rotor 52 that rotates at a high speed, multiple vortexes are formed between the powder removal apparatus housing 51 and the rotor 52. Under the action of airflow and collision, the battery pole piece is wrinkled into a particle material including copper and aluminum particles having a uniform size, and at the same time, the battery powder on the pole piece is separated.

In some embodiments, the battery pole piece is put into the airflow pulverizer, and materials are pushed to collide with each other by airflow to separate the battery powder and ensure the integrity of the copper-aluminum foil.

The mixture of the copper and aluminum particles and the battery powder after powder removal is put into the sieving apparatus 6, and the mixed material is delivered to a dynamic particle size sieving machine by means of pneumatic transmission. The two materials are separated according to the difference between the particle sizes of the copper and aluminum particles and the battery powder. The battery powder is recovered by the cyclone collector and the bag dust collector.

The above examples of the present disclosure focus on differences among the examples. As long as different optimization features among the examples are not contradictory, different optimization features may be combined to form better examples. In consideration of brief description, details are not described herein again. The examples of the present disclosure are described above with reference to the accompanying drawings. However, the present disclosure is not limited to the above specific implementation manners. The above specific implementation manners are merely illustrative rather than restrictive. Those of ordinary skill in the art may also make many forms under the inspiration of the present disclosure without departing from the objectives of the present disclosure and the protection scope of the claims, and such forms all fall within the protection scope of the present disclosure.

## Claims

1. A crushed lithium battery resource recovery apparatus, comprising a decompaction device, wherein the decompaction device comprises:
a housing, a first inlet being disposed at a lower portion of the housing, a first outlet being disposed at an upper portion, a discharging hopper being disposed at a bottom, and a second outlet being disposed at a bottom end of the discharging hopper;
a center barrel, spirally distributed blades being disposed on periphery of the center barrel;
a screen, the screen being disposed in an axial extension direction of the center barrel, a third outlet being disposed at an upper portion of the screen, and a second inlet being disposed at a lower portion; and
a driving apparatus, the driving apparatus being connected with the center barrel to drive the center barrel to rotate;
the center barrel and the screen are disposed in the housing, the screen is disposed between the center barrel and the housing, the discharging hopper is disposed below the center barrel and the screen and separated by a partition plate, a region between the screen and the housing communicates with the discharging hopper, the first inlet is connected with the second inlet, and the first outlet is connected with the third outlet.

2. The crushed lithium battery resource recovery apparatus according to claim 1, further comprising a loading apparatus, wherein the loading apparatus passes through the first inlet and the second inlet and extends into a region between the screen and the center barrel.

3. The crushed lithium battery resource recovery apparatus according to claim 1 or 2, further comprising a material recovery apparatus, wherein the material recovery apparatus comprises a first material recovery apparatus and a second material recovery apparatus.

4. The crushed lithium battery resource recovery apparatus according to claim 3, wherein one side of the first outlet is connected with the third outlet, and the other side is connected with the first material recovery apparatus.

5. The crushed lithium battery resource recovery apparatus according to claim 3 or 4, wherein the second outlet is connected with the second material recovery apparatus.

6. The crushed lithium battery resource recovery apparatus according to any one of claims 3 to 5, further comprising a comprehensive sorting apparatus, wherein the comprehensive sorting apparatus is a vertical air classification apparatus, and separates a first material recovered by the first material recovery apparatus to form a third material and a fourth material.

7. The crushed lithium battery resource recovery apparatus according to claim 6, further comprising a powder removal apparatus, wherein the powder removal apparatus separates the fourth material to form a fifth material.

8. The crushed lithium battery resource recovery apparatus according to claim 7, wherein the powder removal apparatus comprises a powder removal apparatus housing, a rotor and a rotor driving apparatus, the rotor is disposed inside the powder removal apparatus housing, the rotor driving apparatus drives the rotor to rotate at a high speed, a third inlet is disposed at an upper portion of the powder removal apparatus housing, and a fourth outlet is disposed at a lower portion.

9. The crushed lithium battery resource recovery apparatus according to claim 7 or 8, wherein the powder removal apparatus is an airflow pulverizer.

10. The crushed lithium battery resource recovery apparatus according to any one of claims 7 to 9, further comprising a sieving apparatus, wherein the sieving apparatus separates the fifth material into a sixth material and a second material.
